(19) Europäisches Patentamt / European Patent Office / Office européen des brevets

(11) **EP 2 057 734 B1**

(12) **EUROPÄISCHE PATENTSCHRIFT**

(45) Veröffentlichungstag und Bekanntmachung des Hinweises auf die Patenterteilung:
**12.12.2018  Patentblatt 2018/50**

(51) Int Cl.:
**H02P 7/24** (2006.01)　　**G01B 3/46** (2006.01)

(21) Anmeldenummer: **07787256.2**

(22) Anmeldetag: **09.07.2007**

(86) Internationale Anmeldenummer:
**PCT/EP2007/056980**

(87) Internationale Veröffentlichungsnummer:
**WO 2008/022841 (28.02.2008 Gazette 2008/09)**

(54) **VERFAHREN ZUM ERMITTELN DER DREHZAHL EINES STARTERS**

METHOD FOR DETERMINING THE ROTATION SPEED OF A STARTER

PROCÉDÉ POUR DÉTERMINER LA VITESSE DE ROTATION D'UN DÉMARREUR

(84) Benannte Vertragsstaaten:
**DE FR PL**

(30) Priorität: **21.08.2006   DE 102006039112**

(43) Veröffentlichungstag der Anmeldung:
**13.05.2009   Patentblatt 2009/20**

(73) Patentinhaber: **SEG Automotive Germany GmbH
70499 Stuttgart (DE)**

(72) Erfinder:
 • **HEYERS, Klaus
   72766 Reutlingen (DE)**
 • **GE, Jie
   70499 Stuttgart-Hausen (DE)**
 • **TSAKIRIS, Apostolos
   71634 Ludwigsburg (DE)**

(74) Vertreter: **Steinbauer, Florian et al
Dehns Germany
Theresienstraße 6-8
80333 München (DE)**

(56) Entgegenhaltungen:
**DE-A1- 19 524 913**

 • **"Formelsammlung"[Online] XP002470484
Gefunden im Internet:
URL:http://ews.e-technik.uni-ulm.de/deutsch/lehre/eent/formelsammlung.pdf> [gefunden am 2008-02-26]**

**Beschreibung**

Stand der Technik

Die Erfindung betrifft ein Verfahren zum Bestimmen der Drehzahl eines Starters zum Starten von Verbrennungsmotoren gemäß dem Oberbegriff des Patentanspruchs 1.

Verbrennungsmotoren heutiger Kfz werden im Allgemeinen von einem so genannten Ritzelstarter gestartet. Dieser umfasst im Wesentlichen einen Gleichstrommotor mit einem vom Motor angetriebenen Ritzel, das in einen Zahnkranz der Kurbelwelle eingerückt wird und den Verbrennungsmotor beim Startwunsch andreht. Wird ein Startbefehl durch das Motorsteuergerät initiiert, bewirkt dieser, dass ein so genanntes Einrückrelais anzieht und das Ritzel in den Zahnkranz der Kurbelwelle einspurt. Wenn das Einrückrelais angezogen ist, wird automatisch ein Hauptstrompfad geschlossen, der den Starter mit elektrischer Leistung versorgt. Dadurch wird der eigentliche Andrehvorgang gestartet.

Bei Fahrzeugen, die für einen Start-Stopp-Betrieb ausgelegt sind, wird das Ritzel in manchen Fällen bereits vor dem Stillstand des Verbrennungsmotors in den Zahnkranz eingerückt. Der nachfolgende Startvorgang kann somit erheblich schneller durchgeführt werden, da das Ritzel beim Start bereits eingerückt ist. In diesem Fall wird der Starter, sobald ein Stopp-Signal erkannt wird, in Drehzahl versetzt und das Ritzel eingerückt, noch bevor der Verbrennungsmotor vollständig zum Stillstand gekommen ist. Um ein möglichst geräusch- und verschleißarmes Einspuren zu gewährleisten, muss das Starterritzel genau auf die Umfangsgeschwindigkeit der Kurbelwelle gebracht und synchron eingerückt werden. Die Drehzahl des Starters muss daher sehr genau bekannt sein.

Die Starter-Drehzahl könnte z. B. mittels eines Drehzahl-Sensors gemessen werden. Dies ist jedoch relativ aufwendig und teuer.

Aus der DE 195 24 913 A1 sind Verfahren zum Bestimmen der Drehzahl eines Gleichstrommotors bekannt, bei denen die Drehzahl mittels eines Berechnungsalgorithmus aus elektrischen Größen berechnet wird. Diese elektrischen Größen sind die Klemmenspannung des Gleichstrommotors, die Bürstenspannung des Gleichstrommotors sowie dessen Ankerstrom.

Die zugehörige Formel, nach der die Drehzahl des Gleichstrommotors berechnet werden kann, ist beispielsweise aus der Formelsammlung XP 00 24 70 484 bekannt.

Offenbarung der Erfindung

Es ist daher die Aufgabe der vorliegenden Erfindung, ein einfaches und kostengünstiges Verfahren zur Bestimmung der Drehzahl eines Starters zu schaffen.

Gelöst wird diese Aufgabe gemäß der Erfindung durch die im Patenanspruch 1 angegebenen Merkmale. Weitere Ausgestaltungen der Erfindung sind Gegenstand von Unteransprüchen.

Ein wesentlicher Aspekt der Erfindung besteht darin, die Starter-Drehzahl aus elektrischen Größen zu berechnen. Dies hat insbesondere den Vorteil, dass die Drehzahl-Bestimmung ohne einen speziellen Drehzahlsensor auskommt und somit besonders einfach und kostengünstig zu realisieren ist.

Gemäß einer bevorzugten Ausführungsform der Erfindung wird die Starter-Drehzahl n aus der Klemmenspannung $U_{45}$ des Starters und/oder der Bürstenspannung $U_{br}$ und ggf. dem Ankerstrom I des Starters berechnet. Zum Messen der einzelnen Größen sind vorzugsweise entsprechende Strom- bzw. Spannungssensoren vorgesehen. Die Bürstenspannung wird vorzugsweise mittels eines Algorithmus geschätzt.

Die Starter-Drehzahl kann beispielsweise aus folgender Beziehung berechnet werden:

$$n = \frac{U_{45} - I \cdot R_{statt} - I \cdot k_B - U_{br}}{k_n} \qquad (1)$$

Dabei ist:

$U_{45}$    die äußere Klemmenspannung des Starters

I    der Starterstrom,

$R_{statt}$    der Ankerwiderstand,

$U_{br}$    die Bürstenspannung, und

$k_n$    ein Maschinenparameter, der insbesondere die Konstruktion des Starters und die Magnetfeldstärke berücksichtigt.

kB    =Konstante für stromabhängigen Bürstenspannungsabfall

Die elektrischen Größen $U_{45}$, $U_{br}$ und I werden vorzugsweise im Leerlauf, insbesondere beim Auslaufen des Starters gemessen. Im stromlosen Auslaufbetrieb des Starters (d.h. die Verbindung zur Versorgungsspannung ist unterbrochen) reduziert sich Gleichung (1) zu:

$$n = \frac{U_{45} - U_{br}}{k_n} \qquad (2)$$

Die Spannungen $U_{45}$ und $U_{br}$ sind dabei generatorische Größen.

Zu Beginn des Fahrbetriebs, insbesondere beim Kaltstart, wird die Starter-Drehzahl vorzugsweise nach Formel (1) oder (2) berechnet.

Der Berechnungs-Algorithmus wird vorzugsweise anhand einer gemessenen Drehzahl, insbesondere der Motor-Drehzahl, kalibriert. Im eingerückten Zustand des Starters entspricht die Motor-Drehzahl der Starter-Drehzahl (unter Berücksichtigung des Übersetzungsverhältnisses zwischen Starter-Ritzel und Zahnkranz bzw. Kurbelwelle). Die Motor-Drehzahl steht üblicherweise im Motor-Steuergerät zur Verfügung. Der Berechnungs-Algorithmus (z. B. (1) oder (2)) kann somit mittels der Motor-Drehzahl kalibriert werden. Zu diesem Zweck kann z. B. ein Korrekturparameter ($k_{korr}$) bestimmt werden.

Bei weiteren Starts heizt sich der Starter zunehmend auf. Wegen der Abhängigkeit der Größen $U_{br}$ und $k_n$ von der Startertemperatur und dem Alterungszustand des Starters, kann die gemäß Gleichung (1) oder (2) berechnete Starter-Drehzahl relativ stark vom tatsächlichen Wert abweichen. Es wird daher vorgeschlagen, die Drehzahl-Berechnung anzupassen und wenigstens den Temperaturgang zu kompensieren.

Zur Berechnung der Starter-Drehzahl n kann beispielsweise folgende Gleichung angesetzt werden:

$$n = \frac{U_{45} \cdot k_{korr} - U_{br} \cdot (1 - k_{br} \cdot \Delta T)}{k_n \cdot (1 + k_m \cdot \Delta T)} \qquad (3)$$

Dabei ist $\Delta T$ eine Temperaturänderung des Starters gegenüber dem letzten Start, $k_m$ und $k_{br}$ sind Temperaturkoeffizienten, die vorzugsweise linear und temperaturunabhängig sind, und $k_{korr}$ ist ein Korrekturfaktor, der die Abweichung der Berechnung beim Kaltstart korrigiert.

Die Anfangstemperatur des Starters vor dem ersten Start wird als gleich angenommen, wie die Motortemperatur. Diese wird bei allen gängigen Motoren gemessen und der Wert liegt im Steuergerät vor.

Die Temperaturänderung $\Delta T$ ergibt sich vorzugsweise aus einem thermischen Modell, das die thermischen Vorgänge im Starter widerspiegelt. Zur Bestimmung der Starter-Temperatur bzw. dessen Temperaturänderung wird vorzugsweise die bei einem Startvorgang auftretende Verlustenergie geschätzt und die Temperatur bzw. Temperaturänderung anhand des thermischen Modells berechnet.

Gemäß einer ersten Ausführungsform der Erfindung wird die Verlustenergie basierend auf einem in einem Speicher hinterlegten Datensatz bestimmt. Der Datensatz umfasst beispielsweise die Verlustenergie bei einem Startvorgang in Abhängigkeit von einer Anfangstemperatur in Form einer Tabelle (Look-up-table). Die Startertemperatur bzw. dessen Temperaturänderung wird dann vorzugsweise anhand des thermischen Modells berechnet.

Gemäß einer zweiten Ausführungsform der Erfindung wird die bei einem Startvorgang auftretende Verlustenergie $W_l$ aus einer elektrischen Energiebilanz ermittelt, für die beispielsweise:

$$W_l = I^2 \cdot R_{stat} + U_{br} \cdot I \qquad (4)$$

angesetzt werden kann. Dabei ist $U_{br}$ die Bürstenspannung, I der Ankerstrom und $R_{stat}$ der ohmsche Widerstand des Ankers. Die Bürstenspannung $U_{br}$ wird hier als bekannt vorausgesetzt, d.h. abhängig vom Strom als Kennfeld hinterlegt oder als Konstante hinterlegt, der Ankerwiderstand $R_{stat}$ ist bekannt.

Der Ankerstrom I von Gleichung (4) kann beispielsweise aus dem Drehzahlverlauf des Starters bei einem Startvorgang ermittelt werden. Hierzu wird die n = f(I) Kennlinie des Starters als Kennfeld hinterlegt. Diese Kennlinie wird dann auf die aktuelle Temperatur umgerechnet und liefert die zeitabhängigen Starterströme. Zur Bestimmung der Starter-Drehzahl wird vorzugsweise die vom Motor-Steuergerät gelieferte Motor-Drehzahl während der Andrehphase herangezogen.

Alternativ könnte der Ankerstrom I auch während des Startvorgangs gemessen und basierend darauf die Verlustenergie $W_l$ ermittelt werden. Die Startertemperatur bzw. dessen Temperaturänderung ergibt sich dann wiederum aus dem thermischen Modell für den Starter.

Die bezüglich der Temperatur kompensierte Starter-Drehzahl, z.B. gemäß Gleichung (3), kann bei einem nachfolgenden Start wiederum an den gemessenen, tatsächlichen Wert n angepasst werden. Zu diesem Zweck wird wiederum im eingerückten Zustand des Starters die Motordrehzahl $n_{mot}$ gemessen, die Starter-Drehzahl n z. B. gemäß (3) berechnet, und der Berechnungs-Algorithmus im Falle einer Abweichung zwischen den beiden Drehzahlen n, $n_{mot}$ korrigiert. Zum Zwecke der Korrektur kann z. B. eine korrigierte Temperatur bzw. Temperaturänderung $\Delta T$ eingeführt werden. Die vom thermischen Modell geschätzte Temperatur bzw. Temperaturänderung $\Delta T_{est}$ kann z. B. mittels eines Korrekturfaktors $k_{th}$ korrigiert werden. Es kann z.B. folgende Beziehung angesetzt werden:

$$\Delta T = k_{th} \cdot \Delta T_{est} \qquad (5)$$

wobei $\Delta T_{est}$ die vom thermischen Modell geschätzte Temperatur ist.

Kurze Beschreibung der Zeichnungen

Die Erfindung wird nachstehend anhand der beigefügten Zeichnungen beispielhaft näher erläutert. Es zeigen:

Fig. 1    eine schematische Ansicht eines Ritzelstarters;

Fig. 2    ein Flussdiagramm zur Darstellung der wesentlichen Verfahrensschritte eines Verfahrens zum Berechnen der Starter-Drehzahl n; und

Fig. 3    ein thermisches Modell für den Starter zur Bestimmung einer Startertempe-ratur bzw. Temperaturänderung.

Ausführungsformen der Erfindung

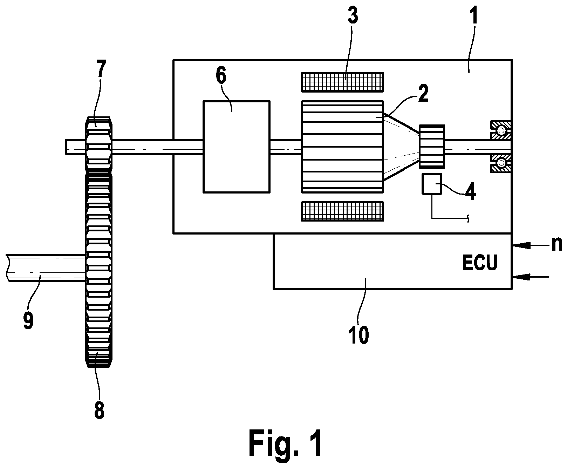

Fig. 1 zeigt eine stark vereinfachte schematische Darstellung eines Starters 1 für Verbrennungsmotoren, wie er insbesondere bei Kraftfahrzeugen zur Anwendung kommt. Der Starter 1 umfasst im Wesentlichen einen Gleichstrommotor 2, 3, bestehend aus einem Anker 2 mit Ankerwicklungen und einem Stator mit mehreren Permanentmagneten 3. Die im Anker 2 enthaltenen Ankerwicklungen werden über Bürsten 4 mit elektrischer Leistung versorgt. An der Motorwelle 5 ist ein Ritzel 7 befestigt, das bei einem Startvorgang in einen Zahnkranz 8 der Kurbelwelle 9 einrückt. Zum Ein- bzw. Ausrücken des Ritzels 7 ist ein Einrückmechanismus 6 vorgesehen, der üblicherweise einen Einrückhebel, sowie ein Einrückrelais umfasst, mittels dessen der Hauptstrompfad des Starters 1 geschaltet wird.

Der Starter 1 umfasst ein eigenes Starter-Steuergerät 10, das u. a. dazu genutzt wird, die Drehzahl n des Starters 1 zu berechnen und den Starter 1 entsprechend zu regeln. Der Starter 1 ist hier für den Einsatz in Fahrzeugen mit einem Start-Stopp-Betrieb ausgelegt. Bei einem Start-Stopp-Betrieb wird der Verbrennungsmotor in bestimmten Fahrsituationen, wie z.B. bei einem Halt vor einer Ampel, automatisch ausgeschaltet und dabei ein Stopp-Signal STOP erzeugt. Sobald der Fahrer wieder losfahren möchte und hierzu beispielsweise das Bremspedal loslässt, wird der Verbrennungsmotor neu gestartet. Wenn die Drehzahl des Verbrennungsmotors bereits so weit gesunken ist, dass ein Selbststart nicht mehr möglich ist, wird er mittels des Starters 1 neu gestartet. Das Ritzel wird dabei zunächst auf die Motor-Drehzahl gebracht, so dass es synchron zum Zahnkranz 8 läuft, und dann in den Zahnkranz 8 des auslaufenden Motors eingerückt. Die Starter-Drehzahl n wird mittels eines mathematischen Algorithmus berechnet, für den beispielsweise folgende Gleichung angesetzt werden kann:

$$n = \frac{U_{45} \cdot k_{korr} - U_{br} \cdot (1 - k_{br} \cdot \Delta T)}{k_n \cdot (1 + k_m \cdot \Delta T)}$$

Dabei ist

| | |
|---|---|
| $U_{45}$ | die äußere Klemmenspannung des Starters |
| I | der Starterstrom, |
| $R_{stat}$ | der Ankerwiderstand, |
| $U_{br}$ | die Bürstenspannung, und |
| $k_n$ | ein Maschinenparameter, der insbesondere die Konstruktion des Starters und die Magnetfeldstärke berücksichtigt, und |
| $k_{korr}$, $k_{br}$ und $k_m$ | Korrekturfaktoren. |

Beim Kaltstart des Verbrennungsmotors gilt ∆T = 0 und $k_{korr}$ = 1. Als Starter-Temperatur wird die Umgebungstemperatur, wie z. B. die Öl-Temperatur herangezogen. Die Spannungen $U_{45}$ (Klemmenspannung) und $U_{br}$ (Bürstenspannung) werden beim Hochfahren des Starters im Leerlauf gemessen und daraus die Drehzahl n berechnet.

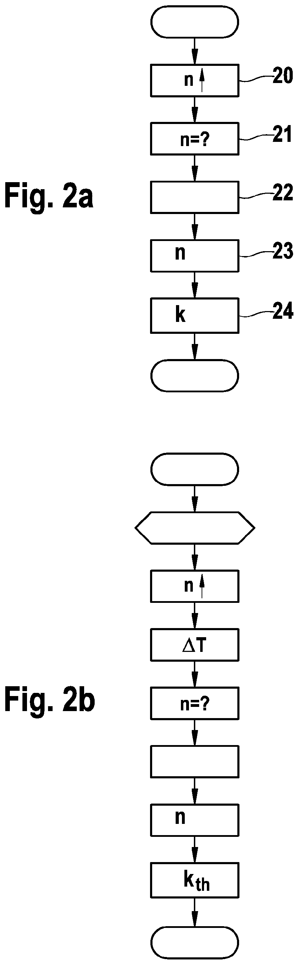

Fig. 2a zeigt die wesentlichen Verfahrensschritte eines Verfahrens zum Berechnen der Starter-Drehzahl n basierend auf Gleichung (3) für den Fall eines Kaltstarts. In Schritt 20 wird der Starter 1 zunächst hochgefahren und das Ritzel 7 mit dem Zahnkranz 8 synchronisiert. Die Drehzahl n des Starters 1 wird dabei in Schritt 21 anhand von Gleichung (3) berechnet, wobei ∆T = 0 und $k_{korr}$ = 1 ist. Die Spannungen $U_{45}$ und $U_{br}$ werden im Leerlauf gemessen. Sobald die gewünschte Drehzahl n erreicht ist, wird das Ritzel 7 in den Zahnkranz 8 des auslaufenden Verbrennungsmotors eingerückt (Schritt 22).

Da die Motordrehzahl im eingerückten Zustand der Starter-Drehzahl n entspricht (unter Berücksichtigung des Übersetzungsverhältnisses), kann der Algorithmus kalibriert werden. Zu diesem Zweck wird in Schritt 23 die Motor-Drehzahl gemessen und in Schritt 24 ein Korrekturfaktor $k_{korr}$ berechnet, mit dem der Algorithmus (3) angepasst wird.

Bei nachfolgenden Starts, bei denen die Starter-Temperatur höher ist als die Umgebungstemperatur, muss die Temperaturabhängigkeit der Bürstenspannung $U_{br}$ und des Maschinenparameters $k_n$ berücksichtigt werden. Die Temperatur bzw. Temperaturänderung des Starters wird dabei vorzugsweise mittels eines thermischen Modells des Starters bestimmt.

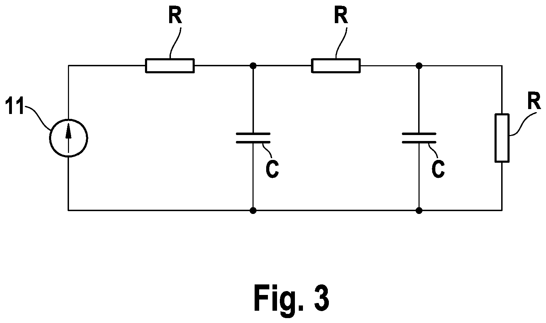

Fig. 2b zeigt die wesentlichen Verfahrensschritte eines Verfahrens zum Berechnen der Starter-Drehzahl n basierend auf Gleichung (3) bei einem nachfolgenden Start-Vorgang (Warmstart). Dabei wird in einem ersten Schritt 30 zunächst ermittelt, ob ein Stopp-Signal STOP vorliegt. Falls ja (J), wird der Starter 1 hochgefahren und das Ritzel 7 mit dem Zahnkranz 8 synchronisiert. Die Drehzahl n des Starters 1 wird dabei gemäß Gleichung (3) berechnet. Die Temperaturänderung ∆T aus Gleichung (3) ergibt sich aus einem Temperaturmodell des Starters, wie es in Fig. 3 beispielhaft dargestellt ist. Das Temperaturmodell berechnet in Schritt 32 eine Temperatur bzw. Temperaturänderung des Starters 1 unter Berücksichtigung einer Anfangstemperatur, des Energieeintrags beim letzten Start und der Abkühl-Zeitdauer seit dem letzten Start. Der Energieeintrag kann z. B. mit Gleichung (4) berechnet werden.

Das Ergebnis der Drehzahl-Berechnung wird in Schritt 33 ausgegeben. Wenn die Starter-Drehzahl n gleich der Motordrehzahl ist, wird das Ritzel 7 in Schritt 34 eingerückt.

In den folgenden Schritten 35 und 36 wird der Berechnungs-Algorithmus wiederum kalibriert. Hierzu wird in Schritt 35 die Motor-Drehzahl $n_{mot}$ gemessen und mit der zuvor berechneten Starter-Drehzahl n verglichen. Bei einer Abweichung wird in Schritt 36 ein Korrekturfaktor $k_{th}$ für die vom thermischen Modell geschätzte Temperatur ermittelt.

Fig. 3 zeigt die wesentlichen Elemente eines Temperaturmodells des Starters 1, das im vorliegenden Beispiel einen thermischen Widerstand $R_{Zul}$ für die Zuleitungen des Starters 1, eine thermische Kapazität des Ankers $C_{Ank}$, einen thermischen Widerstand $R_{Luftsp}$ des Luftspaltes zwischen Bürsten 4 und Anker 2, eine thermische Kapazität der Magneten 3 $C_{Mag}$, sowie einen thermischen Ableitwiderstand $R_{Abl}$ parallel zur thermischen Kapazität $C_{Mag}$ der Magneten 3 umfasst. Der in das thermische Netz hineinfließende Wärmestrom ist mit dem Bezugszeichen 11 angezeigt.

Der Wärmestrom kann beispielsweise aus einer im System hinterlegten Tabelle ausgelesen werden. Wahlweise könnte der Wärmestrom auch aus einer Energiebilanz berechnet werden, für die beispielsweise Gleichung (4) angesetzt werden kann.

Der Ankerstrom I kann dabei wahlweise gemessen oder aus der Drehzahlinformation des Motor-Steuergeräts $n_{mot}$ ermittelt werden. Die Bürstenspannung $U_{br}$ wird vorzugsweise geschätzt. Als Ergebnis liefert das thermische Modell eine Temperatur bzw. Temperaturänderung, die dann in Gleichung (3) eingesetzt wird.

**Patentansprüche**

1. Verfahren zum Bestimmen der Drehzahl (n) eines Starters (1), insbesondere für Kfz-Verbrennungsmotoren, bei dem die Drehzahl (n) mittels eines Berechnungs-Algorithmus aus elektrischen Größen ($U_{45}$, $U_{br}$, I) berechnet wird, **dadurch gekennzeichnet, dass** der Berechnungs-Algorithmus kalibriert wird, wobei die Verbrennungsmotor-Drehzahl ($n_{mot}$) gemessen und mit der berechneten Starter-Drehzahl (n) im eingespurten Zustand des Starters verglichen, und der Berechnungs-Algorithmus im Falle einer Abweichung entsprechend korrigiert wird.

2. Verfahren nach Anspruch 1, **dadurch gekennzeichnet, dass** die Drehzahl (n) aus der Klemmenspannung ($U_{45}$) und/oder der Bürstenspannung ($U_{br}$) und/oder dem Ankerstrom (I) berechnet wird.

3. Verfahren nach Anspruch 1 oder 2, **dadurch gekennzeichnet, dass** wenigstens eine der elektrischen Größen ($U_{45}$, $U_{br}$, I) im Leerlaufbetrieb des Starters (1) gemessen wird.

4. Verfahren nach Anspruch 3, **dadurch gekennzeichnet, dass** wenigstens ein Korrekturfaktor ($k_{korr}$, $k_{br}$, $k_m$) zur Korrektur des Berechnungs-Algorithmus ermittelt wird.

**5.** Verfahren nach einem der vorhergehenden Ansprüche, **dadurch gekennzeichnet, dass** der Berechnungs-Algorithmus die Starter-Temperatur oder dessen Temperaturänderung ($\Delta$T) berücksichtigt.

**6.** Verfahren nach einem der vorhergehenden Ansprüche, **dadurch gekennzeichnet, dass** die bei einem Startvorgang auftretende Verlustenergie ($W_l$) bestimmt und anhand eines thermischen Modells die Temperatur (T) bzw. Temperaturänderung ($\Delta$T) des Starters (1) ermittelt wird.

**7.** Verfahren nach Anspruch 6, **dadurch gekennzeichnet, dass** die Verlustenergie ($W_l$) basierend auf einem in einem Speicher hinterlegten Datensatz, in Abhängigkeit von einer Anfangstemperatur, bestimmt wird.

**8.** Verfahren nach Anspruch 6, **dadurch gekennzeichnet, dass** die Verlustenergie ($W_l$) anhand einer elektrischen Energiebilanz ermittelt wird.

**9.** Verfahren nach Anspruch 8, **dadurch gekennzeichnet, dass** der Drehzahlverlauf (n) des Starters (1) während eines Startvorgangs gemessen, anhand des Drehzahlverlaufs (n) ein Ankerstrom (I) ermittelt und basierend darauf die Verlustenergie ($W_l$) berechnet wird.

**10.** Verfahren nach Anspruch 8, **dadurch gekennzeichnet, dass** der Ankerstrom (I) des Starters (1) während eines Startvorgangs gemessen und basierend darauf die Verlustenergie ($W_l$) ermittelt wird.

**11.** Verfahren nach einem der vorhergehenden Ansprüche, **dadurch gekennzeichnet, dass** die Drehzahl (n) des Starters mit:

$$n = \frac{U_{45} \cdot k_{korr} - U_{br} \cdot (1 - k_{br} \cdot \Delta T)}{k_n \cdot (1 + k_m \cdot \Delta T)}$$

berechnet wird, wobei

$U_{45}$ die äußere Klemmenspannung des Starters (1),
$U_{br}$ die Bürstenspannung,
$\Delta$T die Temperaturänderung des Starters (1), und
$k_{korr}$, $k_{br}$ und $k_m$ verschiedene Korrekturfaktoren sind.

**12.** Verfahren nach einem der vorhergehenden Ansprüche, **dadurch gekennzeichnet, dass** im eingerückten Zustand des Starters (1) die Motordrehzahl ($n_{mot}$) gemessen und mit der berechneten Starter-Drehzahl (n) verglichen, und die Temperaturänderung ($\Delta$T) im Falle einer Abweichung korrigiert wird.

**Claims**

**1.** A method for determining the rotational speed (n) of a starter (1), in particular for motor vehicle internal combustion engines, in which the rotational speed (n) is determined by means of a calculation algorithm based on electrical quantities ($U_{45}$, $U_{br}$, I) **characterised in that** the calculation algorithm is calibrated, wherein the engine speed ($n_{mot}$) is measured and compared with the calculated starter speed (n) in the engaged state of the starter, and the calculation algorithm is corrected accordingly in the event of a deviation.

**2.** The method according to claim 1, **characterised in that** the rotational speed (n) is calculated based on the terminal voltage ($U_{45}$) and/or the brush voltage ($U_{br}$) and/or the armature current (I).

**3.** The method according to claim 1 or 2, **characterised in that** at least one of the electrical quantities ($U_{45}$, $U_{br}$, I) is measured in the idle mode of the starter (1).

**4.** The method according to claim 3, **characterised in that** at least one correction factor ($k_{korr}$, $k_{br}$, $k_m$) is determined for correcting the calculation algorithm.

**5.** The method according to any one of the preceding claims, **characterised in that** the calculation algorithm takes into account the starter temperature or its temperature change ($\Delta$T).

6. The method according to one of the preceding claims, **characterised in that** the loss energy ($W_l$) occurring during a starting process is determined and the temperature (T) or temperature change ($\Delta$T) of the starter (1) is determined on the basis of a thermal model.

7. The method according to claim 6, **characterised in that** the loss energy ($W_l$) is determined based on a set of data stored in a memory, depending on an initial temperature.

8. The method according to claim 6, **characterised in that** the loss energy ($W_l$) is determined based on an electrical energy balance.

9. The method according to claim 8, **characterised in that** the speed curve (n) of the starter (1) is measured during a startup, an armature current (I) is determined based on the speed curve (n), and the loss energy ($W_l$) is calculated on that basis.

10. The method according to claim 8, **characterised in that** the armature current (I) of the starter (1) is measured during a starting process and the loss energy ($W_l$) is determined on that basis.

11. The method according to any one of the preceding claims, **characterised in that** the speed (n) of the starter is calculated with

$$n = \frac{U_{45} \cdot k_{korr} - U_{br} \cdot (1 - k_{br} \cdot \Delta T)}{k_n \cdot (1 + k_m \cdot \Delta T)}$$

wherein

$U_{45}$ is the external terminal voltage of the starter (1),
$U_{br}$ ist the brush voltage,
$\Delta T$ is the temperature change of the starter (1) and
$k_{korr}$, $k_{br}$ and $k_m$ are different correction factors.

12. The method according to any one of the preceding claims, **characterised in that** in the engaged state of the starter (1), the engine speed ($n_{mot}$) is measured and compared with the calculated starter speed (n), and the temperature change ($\Delta$T) is corrected in the event of a deviation.

**Revendications**

1. Procédé destiné à déterminer la vitesse de rotation (n) d'un démarreur (1), en particulier pour des moteurs à combustion interne de véhicules, dans lequel la vitesse de rotation (n) est calculée à partir de grandeurs électriques ($U_{45}$, $U_{br}$, I) au moyen d'un algorithme de calcul, **caractérisé en ce que** l'algorithme de calcul est étalonné, dans lequel la vitesse de rotation du moteur à combustion interne ($n_{mot}$) est mesurée et comparée à la vitesse de rotation du démarreur (n) calculée à l'état engagé du démarreur, et l'algorithme de calcul est corrigé en conséquence en cas d'écart.

2. Procédé selon la revendication 1, **caractérisé en ce que** la vitesse de rotation (n) est calculée à partir de la tension aux bornes ($U_{45}$) et/ou de la tension des balais ($U_{br}$) et/ou du courant d'induit (I).

3. Procédé selon la revendication 1 ou 2, **caractérisé en ce qu'**au moins une des grandeurs électriques ($U_{45}$, $U_{br}$, I) est mesurée pendant la marche à vide du démarreur (1).

4. Procédé selon la revendication 3, **caractérisé en ce qu'**au moins un facteur de correction ($k_{korr}$, $k_{br}$, $k_m$) est déterminé pour corriger l'algorithme de calcul.

5. Procédé selon l'une des revendications précédentes, **caractérisé en ce que** l'algorithme de calcul tient compte de la température du démarreur ou de sa variation de température ($\Delta$T).

6. Procédé selon l'une des revendications précédentes, **caractérisé en ce que** la perte d'énergie ($W_l$) survenant lors

d'un processus de démarrage est déterminée et la température (T) ou la variation de température (ΔT) du démarreur (1) est évaluée au moyen d'un modèle thermique.

7. Procédé selon la revendication 6, **caractérisé en ce que** la perte d'énergie (W$_l$) est déterminée sur la base d'un ensemble de données stocké dans une mémoire, en fonction d'une température initiale.

8. Procédé selon la revendication 6, **caractérisé en ce que** la perte d'énergie (W$_l$) est déterminée au moyen d'un bilan d'énergie électrique.

9. Procédé selon la revendication 8, **caractérisé en ce que** la courbe de vitesse de rotation (n) du démarreur (1) est déterminée pendant un processus de démarrage, un courant d'induit (l) est déterminé au moyen de la courbe de vitesse de rotation (n) et la perte d'énergie (W$_l$) est calculée sur la base de celui-ci.

10. Procédé selon la revendication 8, **caractérisé en ce que** le courant d'induit (l) du démarreur (1) est mesuré pendant un processus de démarrage et la perte d'énergie (W$_l$) est déterminée sur la base de celui-ci.

11. Procédé selon l'une des revendications précédentes, **caractérisé en ce que** la vitesse de rotation (n) du démarreur (1) est calculée d'après la formule :

$$n = \frac{U_{45} \cdot k_{korr} - U_{br} \cdot (1 - k_{br} \cdot \Delta T)}{k_n \cdot (1 + k_m \cdot \Delta T)}$$

dans laquelle

U$_{45}$ est la tension aux bornes extérieures du démarreur (1),
U$_{br}$ est la tension des balais,
ΔT est la variation de température du démarreur (1), et
k$_{korr}$, k$_{br}$ et k$_m$ sont différents facteurs de correction.

12. Procédé selon l'une des revendications précédentes, **caractérisé en ce que** lorsque le démarreur (1) est à l'état engagé, la vitesse de rotation du moteur (n$_{mot}$) est mesurée et comparée à la vitesse de rotation du démarreur (n) calculée, et la variation de température (ΔT) est corrigée en cas d'écart.

Fig. 1

**Fig. 2a**

**Fig. 2b**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19524913 A1